# EUROPEAN PATENT SPECIFICATION

(11) **EP 4 046 818 B1**
(45) Date of publication and mention of the grant of the patent: **01.10.2025**
(21) Application number: 20877764.9
(22) Date of filing: 13.10.2020
(51) Int. Cl.: B60B 27/04, F16H 3/50, F16H 63/30, B60K 17/04, F16D 25/061

(54) **WHEEL HUB FOR MOUNTING A WHEEL ON AN AXLE OF A WORK VEHICLE**
RADNABE ZUM MONTIEREN EINES RADES AUF EINER ACHSE EINES ARBEITSFAHRZEUGS
MOYEU DE ROUE POUR MONTER UNE ROUE SUR UN AXE D'UN VÉHICULE DE TRAVAIL

(30) Priority: 16.10.2019 BR 102019021704
(43) Date of publication of application: 24.08.2022
(73) Proprietor: IVECO S.P.A., 10156 Torino (IT)
(72) Inventor: PEREIRA DE LEMOS, José Francivaldo, 35700-187 Sete Lagoas (BR)
(74) Representative: Studio Torta S.p.A.
(86) International application number: PCT/BR2020/050404
(87) International publication number: WO 2021/072517

(56) References cited:
- WO-A1-2016/110823
- WO-A1-2016/110823
- WO-A1-2018/107257
- WO-A1-2018/107258
- WO-A1-2018/107258
- BR-A- PI0 400 810
- CN-U- 206 206 511
- JP-A- 2016 124 441
- US-A- 4 040 312
- US-A1- 2007 117 672
- US-A1- 2014 216 883
- US-A1- 2019 344 659
- US-B2- 8 550 197

## Description

### FIELD OF THE INVENTION

The present invention relates to wheel hubs of a work vehicle, specifically, to a reduction system for a wheel hub.

### BACKGROUND OF THE INVENTION

A work vehicle, such as a large truck, generally includes a chassis, a suspension system, an engine to provide a driving force, a transmission, and a drive train, which includes at least three axles with wheels attached. For example, the work vehicle may include a front steering axle and a pair of rear tandem axles to increase the load bearing and towing capacity of the work vehicle. To accommodate various driving conditions, the work vehicle drive train may include multiple clutches to drive one or more rear axles and gearboxes to provide one or more speed reductions between the engine and the wheels.

The drive train of the work vehicle may have multiple traction, i.e. drive configurations, such as a 6x2, 6x4, 6x6, 8x4, 8x8 or 10x8 drive configuration, due to the various clutches that selectively (dis)connect the driving force to the axles. For example, a work vehicle with a 6x4 drive configuration may include an undriven steerable front axle and a pair of rear tandem or individual axles. Therefore, when the work vehicle is towing a payload, such as a semi-trailer loaded with goods, both rear axles can be driven to increase the towing capabilities of a work vehicle, and when the work vehicle is on a return trip with no payload, only one of the rear axles can be driven to increase fuel economy. Additionally, in other circumstances, for example when towing a heavy load uphill, it may be desirable to provide a driving force to all three axles of the work vehicle in a 6x6 drive configuration to increase traction.

The work vehicle may also provide one or more speed reductions between the engine and the wheels in order to reduce wheel speed and increase engine torque. For example, a reduction system may be provided for each wheel hub of the respective axle.

The reduction system may include a planetary gearbox operably connected between the differential drive axle and the wheel hub. Typically, the reduction ratio between the drive axle and the wheel hub is fixed, for example at a 2:1 reduction. However, some reduction systems include a selectively engaging planetary gearbox that allows full disengagement as well as a variable reduction ratio.

Document WO 2016/110823 describes a wheel hub reduction system with a single piston and a sliding sleeve for selectively engaging a planetary gearbox with the wheel hub in two indexed positions, which results in a reduction ratio of 2:1 or 1:1 between the drive axle and the wheel hub. In this way, the speed reduction at the wheels can be appropriately matched with the loading of the work vehicle.

WO 2018/107258 describes a reduction system with a two-piston system and a sliding sleeve for selectively engaging and disengaging a planetary gearbox to/from the wheel hub. The reduction system can completely disengage the driving force from the wheel hub and provides a reduction ratio of 2:1 or 1:1. In this way, the reduction system can accommodate a wider spectrum of operating positions, and the full disengagement position can substantially increase the work vehicle's fuel economy. However, the two-piston system can increase manufacturing and operating costs.

What is needed is a cost-effective wheel hub reduction system to accommodate various types of drive conditions.

### DESCRIPTION OF THE INVENTION

The aforementioned aims are reached by a wheel hub as claimed in the appended set of claims.

A possible advantage of a work vehicle comprising a wheel hub according to claim 1 is that the reduction system can accommodate various drive conditions of the work vehicle to selectively increase or decrease wheel torque and traction.

A further possible advantage of a work vehicle comprising a wheel hub according to claim 1 is that the reduction system can substantially increase the fuel economy of the work vehicle by completely releasing the traction wheels.

### BRIEF DESCRIPTION OF THE FIGURES

For the purpose of illustration, the figures show certain embodiments of the present invention. It should be understood, however, that the invention is not limited to the precise arrangements, dimensions and instruments shown. The same numbers refer to the same features in the figures. In the figures:
- Figure 1 illustrates a side view of one embodiment of a work vehicle, the work vehicle comprising a rear tandem axle assembly according to an embodiment of the present invention;
- Figure 2 illustrates a cross-section view of a wheel hub with a housing and a reduction system, in which the reduction system is in the 2:1 speed ratio reduction operating position, according to an embodiment of the present invention; and
- Figure 3 illustrates a cross-section view of a wheel hub in Figure 2, in which the reduction system is in the operating position to disengage or freely rotate the wheels.

### DESCRIPTION OF EMBODIMENTS OF THE INVENTION

The terms "front", "rear", "left" and "right" used in connection with a vehicle and/or components thereof are generally determined with reference to the forward direction of travel of a vehicle and are not to be construed as limiting. The terms "longitudinal" and "transverse" are determined with reference to the forward and rearward direction of the vehicle and are not to be construed as limiting.

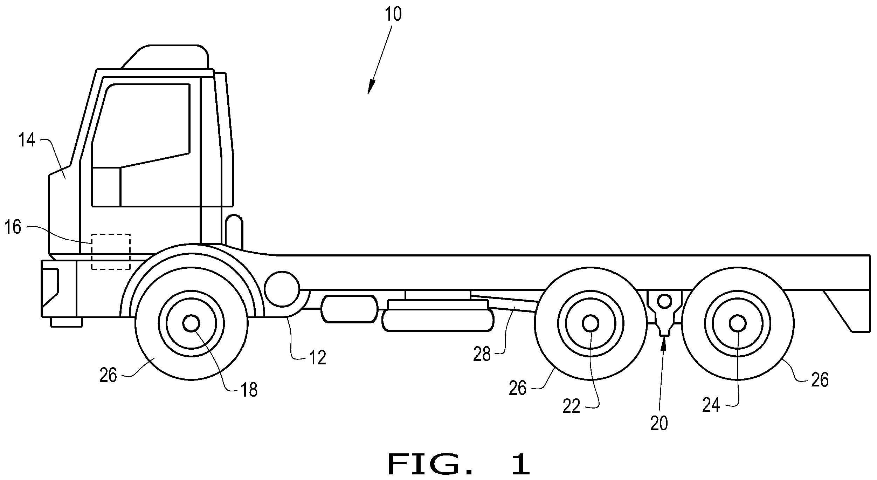

Referring now to the figures, and more particularly to Figure 1, a work vehicle 10 is shown which typically includes a chassis 12, a cab 14 for an operator, a main engine 16, for example, a diesel engine 16, a front axle 18, a rear axle assembly 20 with at least two axles 22, 24, wheels 26 attached to the axles 18, 22, 24, and a drive system including a transmission, that accompanies a gearbox(es), and a main drive axle 28 for transmitting driving force, i.e., drive torque, from the engine 16 to the rear axle assembly 20 to provide primary traction for the work vehicle 10. The front wheels 26 of the front axle 18 are normally configured to be steered to provide directional control for the work vehicle 10. The engine 16, via the transmission system, may drive the wheels 26 of any axle 18, 22, 24. The work vehicle 10 may have any desired drive configuration, such as a 4x2, 6x6, 6x4, 6x2, 8x8, 8x4, or 10x6 drive configuration. The work vehicle 10 may be in the form of any desired vehicle 10, such as a heavy/large truck or bus. For example, the work vehicle 10 may be a commercial truck, up to 45 tons, with a 4x2 or 6x2 drive configuration.

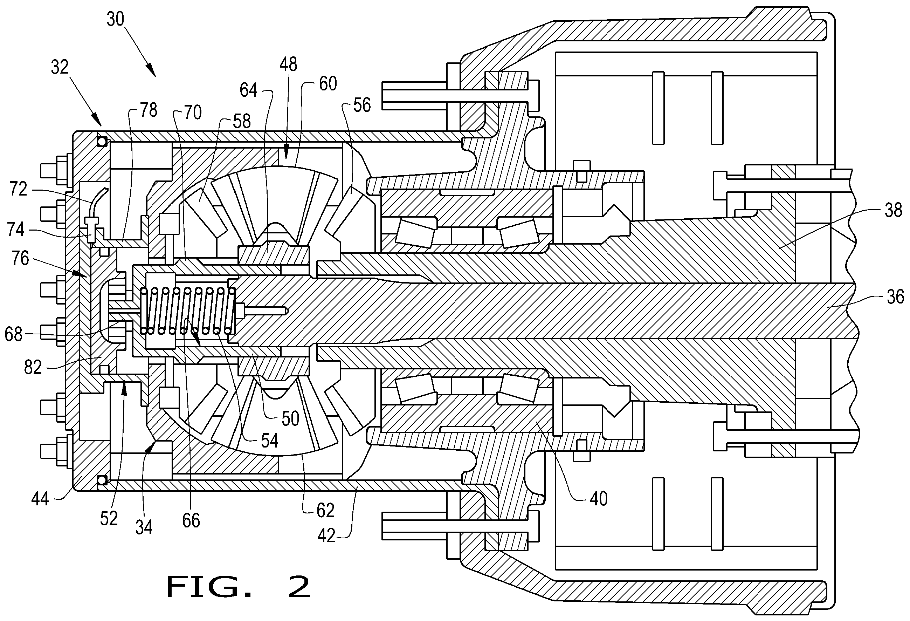

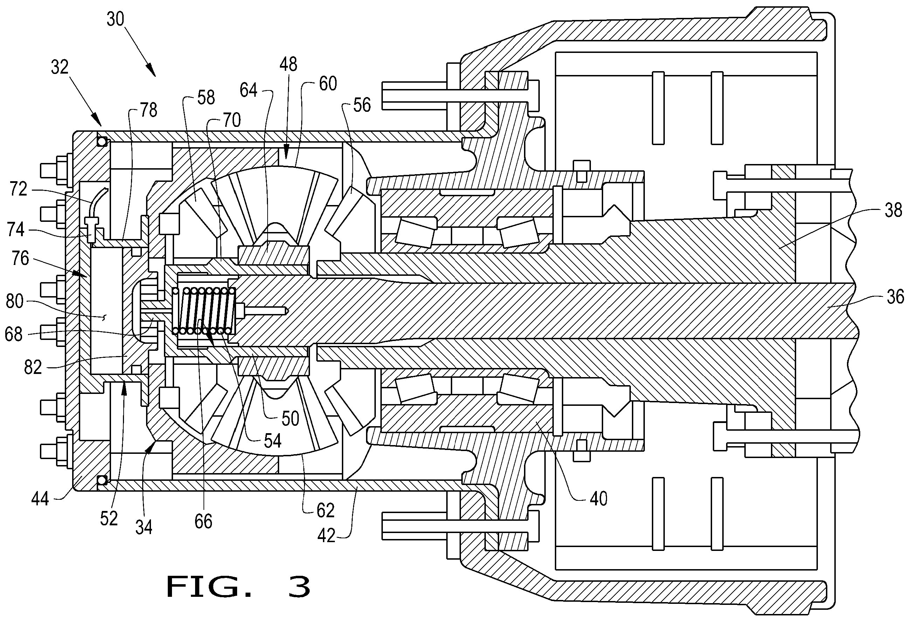

Referring now to Figures 2 and 3 collectively, a wheel hub 30 for the work vehicle 10 is shown. The wheel hub 30 may generally include a housing 32 and a reduction system 34 arranged within the housing 32. The reduction system 34 has a first reduction operating position to provide a reduction in speed ratio, such as a 2:1 reduction, between a driven axle 36, for example, the drive axle 36 extending from a rear differential of the respective axle 22, and the wheels 26 (Figure 2). The reduction system 34 also has a second position of wheel disengagement or wheel release to cease transmitting the driving force from the drive axle 36 to the wheels 26 so that the wheels 26 are completely free of traction (Figure 3). Accordingly, the reduction system 34 may selectively choose the appropriate speed ratio or disengagement position to appropriately accommodate an operating condition of the work vehicle 10, for example, fully loaded, partially loaded or unloaded. For example, when the work vehicle 10 is fully loaded, the reduction system 34 may provide the speed ratio reduction 2:1 in its reduction position to increase torque and force to the wheels 26 or alternatively, when the work vehicle 10 is unloaded, the reduction system 34 may disengage traction to the wheels 26 to significantly increase the fuel economy of the work vehicle 10. As can be appreciated, one or more of the front and/or rear axles 18, 22, 24 may include the wheel hubs 30.

The housing 32 of the wheel hub 30 is connected to the liner or housing 38 of the drive axle 36 by means of bearings 40. The housing 32 includes a cylindrical portion 42 and a side end cap 44 connected to the cylindrical portion 42. The inner surface of the side end cap 44 may include teeth 46. It should be appreciated that the housing 32 may have any desired shape and may comprise any desired material.

The reduction system 34 may generally include a planetary gear housing 48, a sliding sleeve 50, and an actuation device 52 for sliding the sleeve 50 between the reduction and wheel release positions. The reduction system 34 may also include a tilting member 54 for tilting the sleeve 50 so that it is engaged with the planetary gearbox 48.

The planetary gearbox 48 is operably connected between the axle 36 and the wheels 26. The planetary gearbox 48 may be located within the housing 32 The planetary gearbox 48 may generally include a fixed gear 56, a moving gear 58, at least two intermediate gears 60, 62 positioned between the central fixed and moving gears 56, 58, and a planetary carrier 64 for carrying the gears 60, 62. The inner fixed gear 56 may be securely attached to the housing 38 of the drive axle 36. The outer movable gear 58, e.g., central gear 58, may be movably mounted within the housing 32 of the wheel hub 30 via the bearing and/or a designated planetary liner. The intermediate gears 60, 62 are in the form of satellite or planetary gears 60, 62 which are operably connected between and rotate relative to the fixed and movable central gears 56, 58. In the present embodiment, the planetary gearbox 48 includes four planetary gears 60, 62. The gears 56, 58, 60, 62 may be bevel gears; however, the gears 56, 58, 60, 62 may have any desired configuration. The planetary carriers 64 have a receiving orifice that at least partially receives the sleeve 50. The planetary carrier 64 may be in the form of any desired key, fork or gear carrier. As used herein, the term planetary gearbox 48 broadly refers to the central planetary device which transmits force from the drive axle 36 to the wheels 26. It should be appreciated that the planetary gearbox 48 can be configured in various ways so as to have any desired number and size of gears.

The sleeve 50 is selectively connectable to the planetary gearbox 48 in order to provide the 2:1 speed reduction ratio and wheel release 26. The sleeve 50 has an inner bore 66 connected to the drive axle 36 and an outer side end 68 connected to the actuation device 52. The bore 66 turns and opens towards the end of the drive axle 36. It should be appreciated that the bore 66 may have an internal groove or teeth to engage with the corresponding engagement members on the axle 36. The sleeve 50 also has at least one group of teeth 70 which are circumferentially arranged around the outer perimeter of the sleeve 50. The teeth 70 of the sleeve 50 selectively engage with the corresponding teeth on the central gear 58 of the planetary gearbox 48 in the reduction operating position (Figure 2). The sleeve 50 does not operably engage with the housing 32 in the wheel release operation position (Figure 3). As can be appreciated, the sleeve 50 may include one, two or more groups of teeth 70 that engage respectively with the planetary gearbox 48 and the housing 32. The sleeve 50 does not operably engage with the carrier 64 by means of designated grooves or teeth in order to transmit driving force through the same; and thus, the sleeve 50 can rotate and slide independently in relation to the carrier 64. Accordingly, when the driving force is transmitted through the planetary gearbox 48 in the reduction position, the driving force passes from the axle 36 through the sleeve 50, the outer central gear 58 which is completely coupled to the sleeve 50, the planetary gears 60, 62, and the inner fixed gear 56, and finally out of the housing 32 of the wheel hub 30 by means of the bearings 40.

The actuation device 52 is operably connected to the sleeve 50. The actuation device 52 includes a fluid line 72, a valve 74, and a piston 76 which is fluidly connected to the fluid line 72. The fluid line 72 extends through the housing 32. The fluid line 72 may be in the form of a designated hose pipe or a series of conduits, for example slots, within the wheel hub 30. The valve 74 may fluidly connect the fluid line 72 to the piston 76. The valve 74 may be in the form of any desired valve. The piston 76 generally includes a cylinder 78 that defines a fluid chamber 80 and the piston head 82 that is located within and slides relative to the cylinder 78 (Figure 3). The cylinder 78 at least partially receives the sleeve 50 so that the fluid chamber 80 and the piston head 82 are external relative to the sleeve 50. The piston head 82 is connected with the side end 68 of the sleeve 50 by means of (separated) bearings. The actuation device 52 is illustrated as a pneumatic control device with a pneumatic piston 76; however, the actuation device 52 can use any desired fluid. It should be appreciated that the actuation device 52 may also include an air pump, a compressor, various valves, seals, and/or an accumulator. The actuation device 52 may also be operably connected to a control system within the cab of the work vehicle 10 so that the operator may enter a user command within the control system to consequently switch between the desired speed ratio.

The tilting member 54 is located within the bore 66 of the sleeve 50, and is thereby connected between the end of the drive axle 36 and the sleeve 50 to tilt the sleeve 50 so that it can engage with the planetary gearbox 48 in the 2:1 reduction operating position. The tilting member 54 is internal relative to the sleeve 50 and acts in an opposite way to the piston 76. The tilting member 54 may be in the form of any desired tilting member 54, such as a coil spring 54.

In operation, in the 2:1 reduction operating position, the fluid chamber 80 is emptied of fluid so that the force of the tilting member 54 engages the sleeve 50 with the planetary gearbox 48 (Figure 2). In more detail, the teeth 70 of the sleeve 50 slide so as to engage with the moving gear 58. In the wheel release operating position, the fluid chamber 80 is filled with fluid so that the force of the fluid within the fluid chamber 80 overcomes the force of the tilting member 54 and disengages the sleeve 50 from the planetary gearbox 48 (Figure 3). The teeth 70 of the sleeve 50 slide inwards to disengage the moving gear 58. In this way, the sleeve 50 is not connected to the carrier 64, the mobile gear 58 or the housing 32 and the wheels 26 are consequently released from traction.

These and other advantages of the present invention will be apparent to those skilled in the art from the above descriptive report. Consequently, it should be recognised by those skilled in the art that changes or modifications may be made to the above described embodiments without departing from scope of the invention as claimed in the appended set of claims.

## Claims

1. Wheel hub (30) for mounting a wheel (26) on an axle (36) of a work vehicle (10) which comprises:
a housing (32) comprising a side end cap (44); and
a reduction system (34) comprising:
a planetary gearbox (48) configured to be operably connected between the axle (36) and the housing (32);
a sleeve (50) configured to connect in a sliding manner to the axle (36); and
an actuation device (52) connected to the sleeve (50) and configured to slide the sleeve (50),
wherein the reduction system (34) comprises a first operating position in which the sleeve (50) engages with the planetary gearbox (48) to transmit the driving force from the axle (36) at a speed reduction rate, and a second operating position in which the sleeve (50) disengages from the planetary gearbox (48) in order to cease transmitting the driving force from the axle (36) to release the housing (32),
wherein the planetary gearbox (48) comprises a gear (56), a mobile gear (58), at least two planetary gears (60, 62), and a carrier (64) for carrying the planetary gears (60, 62), and the carrier (64) comprises a receiving orifice to at least partially receive the sleeve (50),
**characterized in that** the sleeve (50) does not operably engage with the carrier (64) by means of designated grooves or teeth in order to transmit the driving force through the same so that the sleeve (50) can rotate and slide independently in relation to the carrier (64), and in the first operating position the sleeve (50) fully engages with the mobile gear (58) to transmit the driving force through the planetary gearbox (48)

2. Wheel hub according to claim 1, wherein the housing (32) is completely traction free in the second operating position of the reduction system (34).

3. Wheel hub according to claim 1 or claim 2, wherein the actuation device (52) comprises a fluid line (72) and a piston (76) fluidly connected to the fluid line (72).

4. Wheel hub according to claim 3, wherein the piston (76) comprises a cylinder (78) defining a fluid chamber (80) and a piston head (82) which is located within and slides relative to the cylinder (78), the cylinder (78) at least partially receives the sleeve (50), and the piston head (82) is connected to the sleeve (50) so that the piston (76) is configured to slide the sleeve (50) to engage with or disengage from the planetary gearbox (48).

5. Wheel hub according to claim 3 or claim 4, wherein the actuation device (52) comprises a single piston (76).

6. Wheel hub according to any of claims 3 to 5, wherein the piston (76) is a pneumatic piston (76).

7. Wheel hub according to claim 4, wherein the sleeve (50) comprises a side end (68) connected to the piston (76) and a bore (66) for connecting to the axle (36), and the sleeve (50) is slideable relative to the axle (36).

8. Wheel hub according to claim 7, wherein the reduction system (34) further comprises a tensioning member (54) which is internally arranged within the bore (66) of the sleeve (50) and connected between the sleeve (50) and at the end of the axle (36), and the tensioning member (54) is configured to tension the sleeve (50) so that it is engaged with the planetary gearbox (48).

9. Wheel hub according to claim 8, wherein the tensioning member (54) is a coil spring (54).

10. Wheel hub according to claim 8 or claim 9, wherein the fluid chamber (80) is external with respect to the sleeve (50), and the tensioning member (54) is internal with respect to the sleeve (50) and acts on the sleeve (50) in an opposite manner with respect to the piston (76); in the first operating position the fluid chamber (80) is emptied of fluid so that the force of the tensioning member (54) engages the sleeve (50) with the planetary gearbox (48); in the second operating position the fluid chamber (80) is filled with fluid so that the force of the fluid within the fluid chamber (80) overcomes the force of the tensioning member (54) and disengages the sleeve (50) from the planetary gearbox (48).

11. Wheel hub according to any of the preceding claims, wherein the sleeve (50) is not operably connected to the housing (32) of the wheel hub (30) in the second operating position.

12. Wheel hub according to any of the preceding claims, wherein the sleeve (50) comprises at least one group of teeth (70), arranged circumferentially around the outer perimeter of the sleeve (50), for selectively engaging with the planetary gearbox (48) in the first operating position.

13. Wheel hub according to any of the preceding claims, wherein the speed reduction ratio of the first operating position is 2:1.

## Patentansprüche

1. Radnabe (30) zum Montieren eines Rads (26) an einer Achse (36) eines Arbeitsfahrzeugs (10), umfassend:
ein Gehäuse (32), das eine Seitenendkappe (44) umfasst; und
ein Untersetzungssystem (34), umfassend:
ein Planetengetriebe (48), das konfiguriert ist, um zwischen der Achse (36) und dem Gehäuse (32) operativ verbunden zu sein;
eine Hülse (50), die konfiguriert ist, um auf eine gleitende Weise mit der Achse (36) verbunden zu sein; und
eine Betätigungsvorrichtung (52), die mit der Hülse (50) verbunden und konfiguriert ist, um die Hülse (50) zu verschieben,
wobei das Untersetzungssystem (34) eine erste Betriebsposition umfasst, in der die Hülse (50) mit dem Planetengetriebe (48) in Eingriff steht, um die Antriebskraft von der Achse (36) mit einer Drehzahluntersetzungsrate zu übertragen, und eine zweite Betriebsposition, in der die Hülse (50) von dem Planetengetriebe (48) außer Eingriff steht, um die Übertragung der Antriebskraft von der Achse (36) zu beenden, um das Gehäuse (32) freizugeben,
wobei das Planetengetriebe (48) ein Zahnrad (56), ein bewegliches Zahnrad (58), mindestens zwei Planetenräder (60, 62) und einen Träger (64) zum Tragen der Planetenräder (60, 62) umfasst, und der Träger (64) eine Aufnahmeöffnung umfasst, um die Hülse (50) mindestens teilweise aufzunehmen,
**dadurch gekennzeichnet, dass** die Hülse (50) nicht operativ mit dem Träger (64) mittels bestimmter Nuten oder Zähne in Eingriff steht, um die Antriebskraft durch diese zu übertragen, so dass die Hülse (50) sich unabhängig in Bezug auf den Träger (64) drehen und verschieben kann, und in der ersten Betriebsposition die Hülse (50) vollständig mit dem beweglichen Zahnrad (58) in Eingriff steht, um die Antriebskraft durch das Planetengetriebe (48) zu übertragen.

2. Radnabe nach Anspruch 1, bei welcher das Gehäuse (32) in der zweiten Betriebsposition des Untersetzungssystems (34) vollständig traktionsfrei ist.

3. Radnabe nach Anspruch 1 oder Anspruch 2, bei welcher die Betätigungsvorrichtung (52) eine Fluidleitung (72) und einen Kolben (76) umfasst, der fluidisch mit der Fluidleitung (72) verbunden ist.

4. Radnabe nach Anspruch 3, bei welcher der Kolben (76) einen Zylinder (78) umfasst, der eine Fluidkammer (80) und einen Kolbenkopf (82) definiert, der innerhalb des Zylinders (78) angeordnet ist und relativ zu diesem gleitet, wobei der Zylinder (78) die Hülse (50) mindestens teilweise aufnimmt, und der Kolbenkopf (82) mit der Hülse (50) verbunden ist, so dass der Kolben (76) konfiguriert ist, um die Hülse (50) zu verschieben, um mit dem Planetengetriebe (48) in Eingriff zu kommen oder von diesem außer Eingriff zu kommen.

5. Radnabe nach Anspruch 3 oder Anspruch 4, bei welcher die Betätigungsvorrichtung (52) einen einzelnen Kolben (76) umfasst.

6. Radnabe nach einem der Ansprüche 3 bis 5, bei welcher der Kolben (76) ein pneumatischer Kolben (76) ist.

7. Radnabe nach Anspruch 4, bei welcher die Hülse (50) ein Seitenende (68), das mit dem Kolben (76) verbunden ist, und eine Bohrung (66) zum Verbinden mit der Achse (36) umfasst, und die Hülse (50) relativ zu der Achse (36) verschiebbar ist.

8. Radnabe nach Anspruch 7, bei welcher das Untersetzungssystem (34) ferner ein Spannelement (54) umfasst, das intern innerhalb der Bohrung (66) der Hülse (50) angeordnet und zwischen der Hülse (50) und an dem Ende der Achse (36) verbunden ist, und das Spannelement (54) konfiguriert ist, um die Hülse (50) so zu spannen, dass sie mit dem Planetengetriebe (48) in Eingriff steht.

9. Radnabe nach Anspruch 8, bei welcher das Spannelement (54) eine Schraubenfeder (54) ist.

10. Radnabe nach Anspruch 8 oder Anspruch 9, bei welcher die Fluidkammer (80) außerhalb der Hülse (50) liegt, und das Spannelement (54) innerhalb der Hülse (50) liegt und auf die Hülse (50) in einer entgegengesetzten Weise in Bezug auf den Kolben (76) wirkt; in der ersten Betriebsposition die Fluidkammer (80) von Fluid entleert ist, so dass die Kraft des Spannelements (54) die Hülse (50) mit dem Planetengetriebe (48) in Eingriff bringt; in der zweiten Betriebsposition die Fluidkammer (80) mit Fluid gefüllt ist, so dass die Kraft des Fluids innerhalb der Fluidkammer (80) die Kraft des Spannelements (54) überwindet und die Hülse (50) von dem Planetengetriebe (48) außer Eingriff bringt.

11. Radnabe nach einem der vorhergehenden Ansprüche, bei welcher die Hülse (50) in der zweiten Betriebsposition nicht operativ mit dem Gehäuse (32) der Radnabe (30) verbunden ist.

12. Radnabe nach einem der vorhergehenden Ansprüche, bei welcher die Hülse (50) mindestens eine Gruppe von Zähnen (70) umfasst, die in Umfangsrichtung um den äußeren Umfang der Hülse (50) angeordnet sind, um selektiv mit dem Planetengetriebe (48) in der ersten Betriebsposition in Eingriff zu gelangen.

13. Radnabe nach einem der vorhergehenden Ansprüche, bei welcher das Drehzahluntersetzungsverhältnis der ersten Betriebsposition 2:1 beträgt.

## Revendications

1. Moyeu de roue (30) pour monter une roue (26) sur un essieu (36) d'un véhicule de chantier (10), qui comprend :
un boîtier (32) comprenant un chapeau d'extrémité latéral (44) ; et
un système de réduction (34) comprenant :
une boîte de vitesses à trains épicycloïdaux (48) configurée pour être reliée fonctionnellement entre l'essieu (36) et le boîtier (32) ;
un manchon (50) configuré pour être relié d'une manière coulissante à l'essieu (36) ; et
un dispositif d'actionnement (52) relié au manchon (50) et configuré pour faire coulisser le manchon (50),
dans lequel le système de réduction (34) comprend une première position de fonctionnement dans laquelle le manchon (50) vient en prise avec la boîte de vitesses à trains épicycloïdaux (48) pour transmettre la force motrice de l'essieu (36) à un taux de réduction de vitesse, et une seconde position de fonctionnement dans laquelle le manchon (50) se désolidarise de la boîte de vitesses à trains épicycloïdaux (48) afin de cesser de transmettre la force motrice de l'essieu (36) pour libérer le boîtier (32),
dans lequel la boîte de vitesses à trains épicycloïdaux (48) comprend un train (56), un train mobile (58), au moins deux trains épicycloïdaux (60, 62) et un support (64) pour porter les trains épicycloïdaux (60, 62), et le support (64) comprend un orifice de réception pour recevoir au moins partiellement le manchon (50),
**caractérisé en ce que** le manchon (50) ne vient pas en prise fonctionnellement avec le support (64) au moyen de rainures ou de dents désignées afin de transmettre la force motrice par le biais de ceux-ci de sorte que le manchon (50) puisse tourner et coulisser indépendamment quant au support (64), et dans la première position de fonctionnement, le manchon (50) vient entièrement en prise avec le train mobile (58) pour transmettre la force motrice par le biais de la boîte de vitesses à trains épicycloïdaux (48).

2. Moyeu de roue selon la revendication 1, dans lequel le boîtier (32) est complètement exempt de traction dans la seconde position de fonctionnement du système de réduction (34).

3. Moyeu de roue selon la revendication 1 ou la revendication 2, dans lequel le dispositif d'actionnement (52) comprend une conduite de fluide (72) et un piston (76) relié fluidiquement à la conduite de fluide (72).

4. Moyeu de roue selon la revendication 3, dans lequel le piston (76) comprend un cylindre (78) définissant une chambre de fluide (80) et une tête de piston (82) qui est située dans le et coulisse relativement au cylindre (78), le cylindre (78) reçoit au moins partiellement le manchon (50), et la tête de piston (82) est reliée au manchon (50) de sorte que le piston (76) soit configuré pour faire coulisser le manchon (50) pour qu'il vienne en prise avec ou se désolidarise de la boîte de vitesses à trains épicycloïdaux (48).

5. Moyeu de roue selon la revendication 3 ou la revendication 4, dans lequel le dispositif d'actionnement (52) comprend un seul piston (76).

6. Moyeu de roue selon l'une quelconque des revendications 3 à 5, dans lequel le piston (76) est un piston (76) pneumatique.

7. Moyeu de roue selon la revendication 4, dans lequel le manchon (50) comprend une extrémité latérale (68) reliée au piston (76) et un alésage (66) pour la liaison à l'essieu (36), et le manchon (50) est coulissant relativement à l'essieu (36).

8. Moyeu de roue selon la revendication 7, dans lequel le système de réduction (34) comprend en outre un élément de tension (54) qui est agencé de manière interne dans l'alésage (66) du manchon (50) et relié entre le manchon (50) et à l'extrémité de l'essieu (36), et l'élément de tension (54) est configuré pour tendre le manchon (50) de sorte qu'il soit en prise avec la boîte de vitesses à trains épicycloïdaux (48).

9. Moyeu de roue selon la revendication 8, dans lequel l'élément de tension (54) est un ressort à enroulement (54).

10. Moyeu de roue selon la revendication 8 ou la revendication 9, dans lequel la chambre de fluide (80) est externe par rapport au manchon (50), et l'élément de tension (54) est interne par rapport au manchon (50) et agit sur le manchon (50) d'une manière opposée par rapport au piston (76) ; dans la première position de fonctionnement, la chambre de fluide (80) est vidée de fluide de sorte que la force de l'élément de tension (54) mette le manchon (50) en prise avec la boîte de vitesses à trains épicycloïdaux (48) ; dans la seconde position de fonctionnement, la chambre de fluide (80) est remplie de fluide de sorte que la force du fluide dans la chambre de fluide (80) contre la force de l'élément de tension (54) et désolidarise le manchon (50) de la boîte de vitesses à trains épicycloïdaux (48).

11. Moyeu de roue selon l'une quelconque des revendications précédentes, dans lequel le manchon (50) n'est pas relié fonctionnellement au boîtier (32) du moyeu de roue (30) dans la seconde position de fonctionnement.

12. Moyeu de roue selon l'une quelconque des revendications précédentes, dans lequel le manchon (50) comprend au moins un groupe de dents (70), agencées circonférentiellement autour du périmètre extérieur du manchon (50), pour venir en prise sélectivement avec la boîte de vitesses à trains épicycloïdaux (48) dans la première position de fonctionnement.

13. Moyeu de roue selon l'une quelconque des revendications précédentes, dans lequel le rapport de réduction de vitesse de la première position de fonctionnement est 2:1.
